# EUROPÄISCHE PATENTSCHRIFT

(11) **EP 1 721 770 B1**
(45) Veröffentlichungstag und Bekanntmachung des Hinweises auf die Patenterteilung: **07.10.2009**
(21) Anmeldenummer: 06000417.3
(22) Anmeldetag: 10.01.2006
(51) Int. Cl.: B60J 7/02

(54) **Führungsschiene für ein Kfz-Schiebedachsystem**
Guide rail for a motor vehicle sliding roof system
Glissière pour un système de toit coulissant de véhicule automobile

(30) Priorität: 11.05.2005 DE 202005007475 U
(43) Veröffentlichungstag der Anmeldung: 15.11.2006
(73) Patentinhaber: ArvinMeritor GmbH, 63128 Dietzenbach (DE)
(72) Erfinder: Biewer, Christian, 64839 Münster-Altheim (DE); Jugl, Michael, 65843 Sulzbach (DE)
(74) Vertreter: Prinz & Partner

(56) Entgegenhaltungen:
- EP-A- 1 389 545
- EP-A1- 1 223 065
- EP-A1- 1 291 216
- DE-A1- 10 046 068
- US-A1- 2003 085 594

## Beschreibung

Die Erfindung betrifft eine Führungsschiene für ein Kfz-Schiebedachsystem, umfassend ein erstes Schienenelement, ein mit dem ersten Schienenelement starr verbundenes zweites Schienenelement und wenigstens eine Führungsbahn, die sich ohne Unterbrechung über das erste und das zweite Schienenelement erstreckt und in der ein Gleitelement eines mit einem Deckelteil verbundenen Schlitten geführt sein kann.

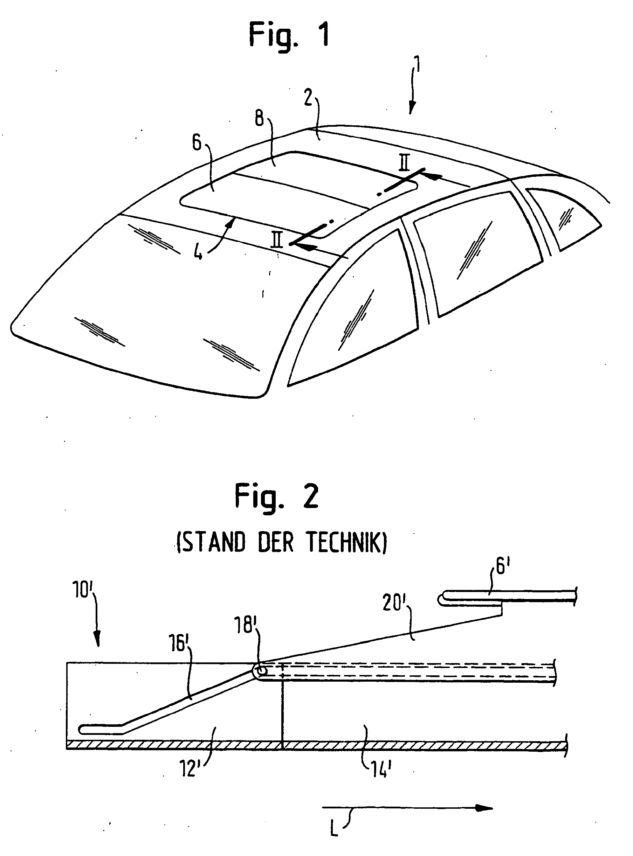

Eine derartige, aus dem Stand der Technik bekannte Führungsschiene 10' ist in Figur 2 dargestellt. Diese weist eine Führungsbahn 16' auf, die in Längsrichtung L der Führungsschiene 10' gesehen zunächst einen schräg nach oben verlaufenden Abschnitt hat, der dazu dient, ein Deckelteil 6', das über einen Schlitten 20' mit daran angebrachtem Gleitelement 18' in der Führungsbahn 16' geführt ist, bei einer Verstellung des Deckelteils 6' in Fahrzeuglängsrichtung zunächst anzuheben. In ihrem weiteren Verlauf ist die Führungsbahn 16' im wesentlichen parallel zur Längsrichtung L der Führungsschiene (und damit des Fahrzeugs) ausgebildet. Zum Zwecke einer vereinfachten Herstellung ist diese Führungsschiene 10' zweiteilig ausgeführt, indem sie ein erstes Schienerielement 12' aufweist, in dessen Bereich der schräg verlaufende Abschnitt der Führungsbahn 16' verläuft, und ein an das erste Schienenelement 12' direkt anschließendes zweites Schienenelement 14', in dessen Bereich die Führungsbahn 16' geradlinig und parallel zur Führungsschienenlängsrichtung L verläuft.

Nachteilig an dieser Ausgestaltung ist, daß das Gleitelement 18' beim Verschieben des Deckelteils 6' nach hinten alle Stoßkanten einer Stoßstelle zwischen dem ersten Schienenelement 12' und dem zweiten Schienenelement 14' gleichzeitig überfahren muß, was einen erhöhten Verschleiß des Gleitelements und zudem eine unerwünschte Geräuschentwicklung zur Folge hat.

Aus der nachveröffentlichten EP 1 685 995 A1 ist ein Schiebedachsystem bekannt, bei dem der Stoß zwischen dem ersten und dem zweiten Schienenelement treppenartig ausgeführt ist, wobei sich ein erster und ein zweiter Endabschnitt senkrecht zur Längsrichtung der Führungsbahn erstreckt und ein dazwischenliegender Mittelabschnitt parallel zur Längsrichtung.

Demgegenüber schafft die Erfindung eine Führungsschiene für ein Kfz-Schiebedachsystem, die sich durch einen geringeren Verschleiß und damit eine höhere Lebensdauer des Gleitelements sowie eine deutlich geringere Geräuschentwicklung auszeichnet.

Erfindungsgemäß sind dazu bei einer Führungsschiene der eingangs genannten Art die Merkmale des kennzeichnenden Teils des Anspruchs 1 vorgegehen. Der Übergang vom ersten zum zweiten Schienenelement ist also so ausgestaltet, daß die Stoßkante nicht mehr senkrecht zur Bewegungsrichtung des Gleitelements verläuft, weshalb die Stoßstellen vom Gleitelement zeitlich versetzt überfahren werden. Auf diese Weise werden sowohl die damit verbundene Abnutzung des Gleitelements als auch die Geräuschentwicklung beim Öffnen des Schiebedachs gegenüber dem Stand der Technik wesentlich verringert. Für die Vertragsstaaten DE und FR zeichnet sich die erfindungsgemäße Ausgestaltung nicht nur durch eine besonders einfache Herstellbarkeit aus, sondern es erfolgt vorteilhaft auch eine geometrische Abstützung der Übergangsstellen durch den schrägen Beschnitt der Schienenelemente. Alternativ könnten die Stoßkanten auch jeden anderen Verlauf aufweisen, der von einem Verlauf senkrecht zur Führungsschiene aufweist.

Für die Vertragsstaaten IT und NL ist gemäß einer bevorzugten Ausführungsform der Erfindung vorgesehen, dass die Stoßkanten geradlinig verlaufen und mit der Längsrichtung der Führungsschiene einen spitzen Winkel einschließen. Diese Ausgestaltung zeichnet sich nicht nur durch eine besonders einfache Herstellbarkeit aus, sondern es erfolgt vorteilhaft auch eine geometrische Abstützung der Übergangsstellen durch den schrägen Beschnitt der Schienenelemente. Alternativ können die Stoßkanten auch jeden anderen Verlauf aufweisen, der von einem Verlauf senkrecht zur Führungsschiene abweicht.

Das erste Schienenelement besteht vorzugsweise aus einem anderen Material als das zweite Schienenelement. Zum Beispiel kann es sich bei dem zweiten Schienenelement um eine Profilschiene aus Metall handeln, die in einfacher Weise durch Strangpressen gefertigt wird. Das Metall ist bevorzugt Aluminium.

Eine besonders einfach zu realisierende Verbindung der beiden Schienenelemente ist möglich, wenn es sich bei dem ersten Schienenelement um ein Steckelement aus Kunststoff handelt, das einfach auf das zweite Schienenelement aufgesteckt wird. Das erste Schienenelement wird dann beispielsweise in einem Spitzgußverfahren hergestellt.

Die Führungsbahn kann im Bereich des ersten Schienenelements einen sich schräg nach oben erstreckenden Abschnitt aufweisen und im Bereich des zweiten Schienenelements durchgehend geradlinig und parallel zur Längsrichtung der Führungsschiene verlaufen. Diese Ausgestaltung ist besonders vorteilhaft, wenn es sich, wie bereits erwähnt, bei dem zweiten Schienenelement um eine Profilschiene aus Metall handelt, da diese problemlos mit durchgehend paralleler und geradlinig verlaufender Führungsbahn hergestellt werden kann. Der schräge Verlauf der Führungsbahn, der dem Anheben des Deckelteils dient, befindet sich vollständig im Bereich des ersten Schienenelements, das sich im Spritzgußverfahren aus Kunststoff grundsätzlich mit beliebiger Form fertigen läßt. Auf diese Weise ergibt sich eine besonders einfach und kostengünstig herstellbare Führungsschiene.

In einer besonders bevorzugten Ausführungsform weist das erste Schienenelement eine im wesentlichen in Längsrichtung der Führungsschiene verlaufende Anlagefläche auf, mit der es sich am zweiten Schienenelement abstützt. Dadurch wird die Verbindung zwischen den Schienenelementen sehr stabil.

Weitere Merkmale und Vorteile ergeben sich aus der nachfolgenden Beschreibung einer bevorzugten Ausführungsform anhand der beigefügten Zeichnung. In dieser zeigt:
- Figur 1 eine schematische Ansicht eines Fahrzeugdachs mit einem Schiebedachsystem;
- Figur 2 eine schematische Schnittansicht einer Führungsschiene gemäß dem Stand der Technik;
- Figur 3 eine Explosionsansicht einer erfindungsgemäßen Führungsschiene;
- Figur 4 eine Seitenansicht der Führungsschiene aus Figur 3;
- Figur 5 eine perspektivische Schnittansicht der Führungsschiene aus Figur 4; und
- die Figuren 6a bis d Schnittansichten der erfindungsgemäßen Führungsschiene mit einem in einer Führungsbahn geführten Gleitelement in unterschiedlichen Stellungen.

In Figur 1 ist schematisch ein Fahrzeug 1 mit einem Fahrzeugdach 2 gezeigt. Am Fahrzeugdach 2 ist ein Schiebedachsystem 4 angebracht, das zwei Deckelteile 6, 8 aufweist, von denen zumindest das erste Deckelteil 6 verstellbar ist. Natürlich kann es sich bei dem Schiebedachsystem 4 auch um ein sogenanntes Schiebehebedach handeln.

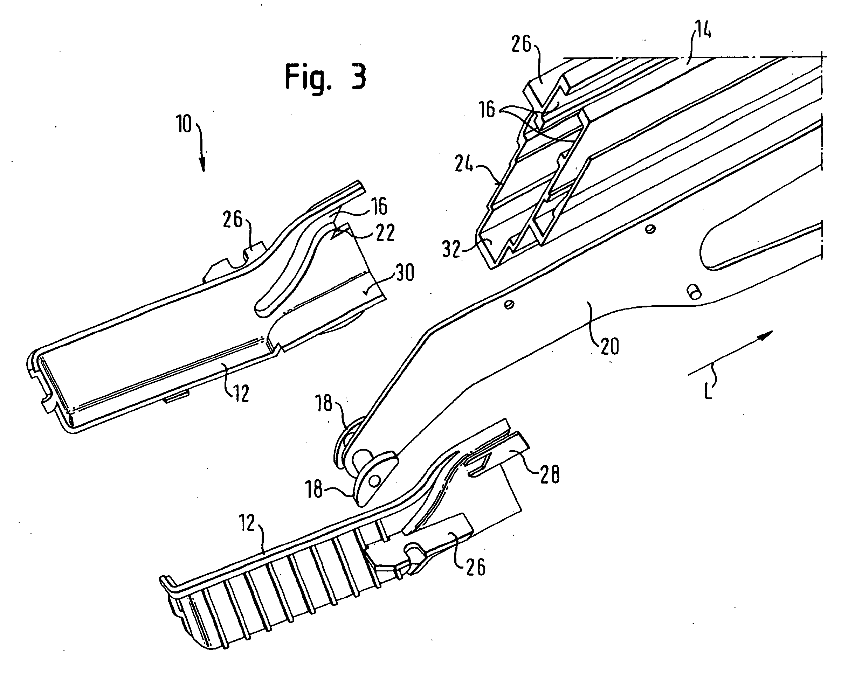

Figur 3 zeigt eine erfindungsgemäße Führungsschiene 10, wie sie bei einem Schiebedachsystem 4 gemäß Figur 1 zum Einsatz kommt. Gewöhnlich sind dabei zwei beidseitig einer Dachöffnung am Fahrzeugdach 2 montierte Führungsschienen vorgesehen.

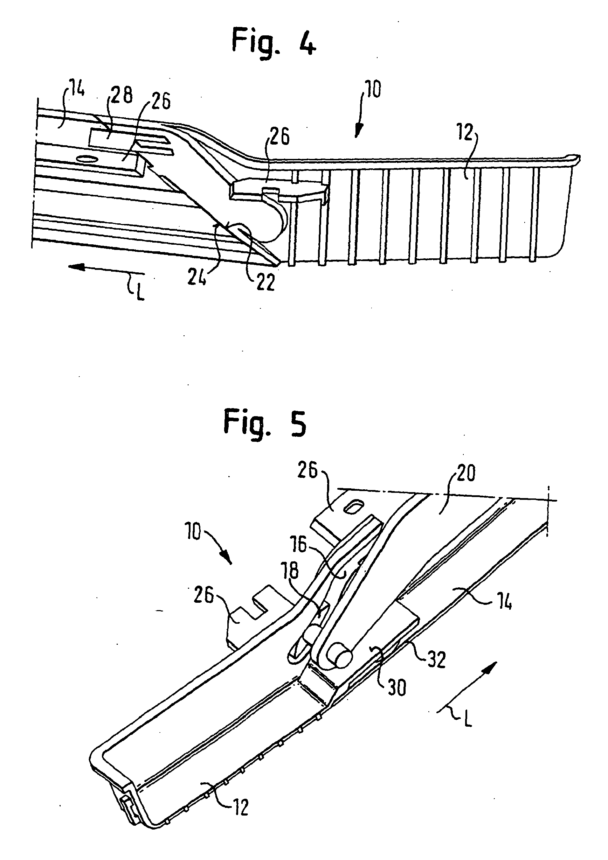

Die Führungsschiene 10 weist ein erstes Schienenelement 12 auf, das hier als zweiteiliges Steckelement aus Kunststoff realisiert ist. Das erste Schienenelement 12 ist im zusammengefügten Zustand der Führungsschiene 10 starr mit einem zweiten Schienenelement 14 verbunden (siehe Figuren 4 bis 6), bei dem es sich um eine im wesentlichen U-förmige Profilschiene aus Aluminium handelt. Die Führungsschiene 10 weist eine Führungsbahn 16 auf, die sich ohne Unterbrechung über das erste und das zweite Schienenelement 12, 14 erstreckt und in der ein Gleitelement 18 eines mit dem Deckelteil 6 verbundenen Schlitten 20 geführt sein kann.

Das erste Schienenelement 12 und das zweite Schienenelement 14 sind in Längsrichtung L der Führungsschiene 10, die im montierten Zustand im wesentlichen der Fahrzeuglängsrichtung entspricht, hintereinander angeordnet, wobei sich das erste Schienenelement 12 vor dem zweiten Schienenelement 14, also weiter vorne am Fahrzeug 1, befindet.

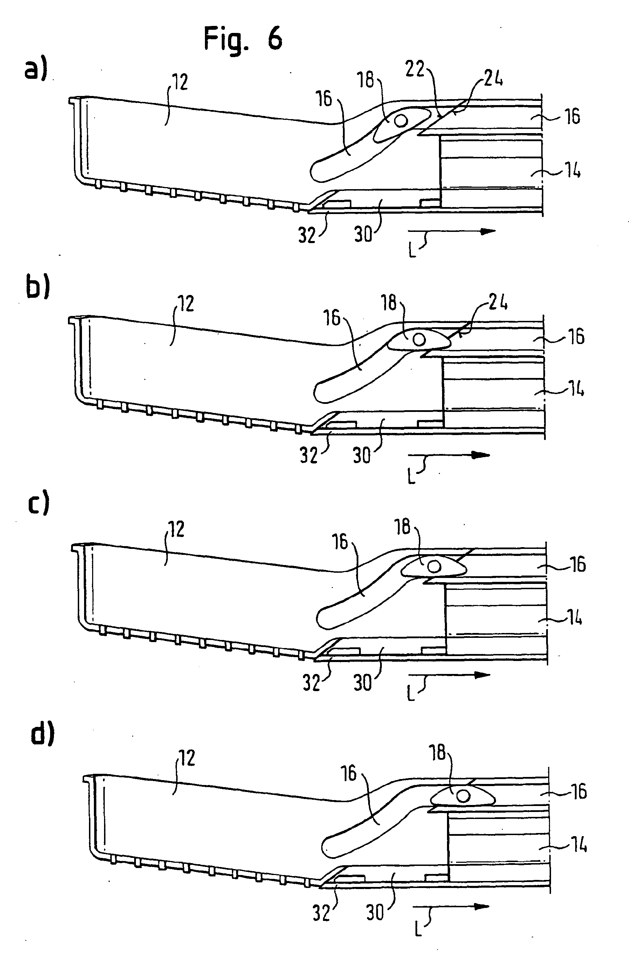

Wie insbesondere aus den Figuren 3 und 4 ersichtlich ist, weist sowohl das erste wie auch das zweite Schienenelement 12, 14 eine dem jeweils anderen Schienenelement zugewandte Stoßkante 22 bzw. 24 auf, die geradlinig verläuft und mit der Längsrichtung L der Führungsschiene 10 einen spitzen Winkel von ca. 35° einschließt. Dabei sind die beiden Stoßkanten 22 und 24 komplementär zueinander ausgebildet, was bedeutet, daß sich im zusammengefügten Zustand der beiden Schienenelemente 12, 14 ein spaltloser Übergang zwischen den Schienenelementen ergibt (siehe Figuren 4 und 6).

Die Führungsbahn 16 verläuft über das gesamte zweite Schienenelement 14 durchgehend geradlinig und parallel zur Längsrichtung L der Führungsschiene 10, weshalb sich das zweite Schienenelement 14 auf besonders einfache Weise in einem Strangpressverfahren herstellen läßt. Im Bereich des ersten Schienenelements 12 hat die Führungsbahn 16 zunächst einen sich schräg nach oben erstreckenden Abschnitt, der dann vor dem Übergang zum zweiten Schienenelement 14 in einen parallel zur Längsrichtung L verlaufenden Abschnitt übergeht.

Beide Schienenelemente 12, 14 weisen seitlich angeordnete Anformungen 26 auf, die der Montage der Führungsschiene 10 am Fahrzeugdach 2 dienen. Zur stabilen Verbindung des ersten Schienenelements 12 mit dem zweiten Schienenelement 14 sind zudem am ersten Schienenelement 12 auf beiden Seiten Ansätze 28 vorgesehen, die im verbundenen Zustand (Figur 4) an den Seiten des zweiten Schienenelements 14 zur Anlage kommen. Das erste Schienenelement 12 weist außerdem eine in Längsrichtung L der Führungsschiene 10 verlaufende Anlagefläche 30 auf, mit der es sich am Boden 32 des zweiten Schienenelements 14 abstützt.

Die Figuren 6a bis d zeigen die Führungsschiene 10 mit einem in der Führungsbahn 16 geführten Gleitelement 18 in unterschiedlichen Positionen, wie sie während des Öffnens des Deckelteils nacheinander eingenommen werden. Durch die erfindungsgemäße Ausgestaltung der Führungsschiene 10 mit schräg verlaufenden Stoßkanten 22, 24 wird dabei sichergestellt, daß sich die Übergangsstellen vom ersten zum zweiten Schienenelement nicht in einer Ebene senkrecht zur Führungsbahn 16 erstrecken. Auf diese Weise erfolgt der Übergang des Gleitelements 18 vom ersten Schienenelement 12 zum zweiten Schienenelement 14 nicht abrupt, sondern allmählich und kontinuierlich, was zu einem geringeren Verschleiß des Gleitelements 18 und einer verminderten Geräuschentwicklung führt.

Ein weiterer Vorteil der erfindungsgemäßen Ausgestaltung besteht darin, daß durch den schrägen Verlauf der Stoßkante 24 des zweiten Schienenelements 14 das erste Schienenelement 12 über die Anlagefläche 30 sich großflächig am Boden 32 des zweiten Schienenelements 14 abstützen kann, was zu einer besonders stabilen Ausgestaltung der Führungsschiene 10 beiträgt. Insbesondere ist das erste Schienenelement 12 im Bereich des Bodens 32 länger im zweiten Schienenelement 14 geführt, als dies bei geradem Beschnitt des Schienenelements 14, wie er aus dem Stand der Technik bekannt ist, der Fall wäre. Auch die Übergangsstellen vom ersten zum zweiten Schienenelement im Bereich der Führungsbahn 16 sind durch die Abschrägung der Stoßkanten 22, 24 abgestützt und damit sehr stabil ausgestaltet.

### Bezugszeichenliste

- 1:: Fahrzeug
- 2:: Fahrzeugdach
- 4:: Schiebedachsystem
- 6, 6':: erstes Deckelteil
- 8:: zweites Deckelteil
- 10, 10':: Führungsschiene
- 12, 12':: erstes Schienenelement
- 14, 14':: zweites Schienenelement
- 16, 16':: Führungsbahn
- 18, 18':: Gleitelement
- 20, 20':: Schlitten
- 22:: Stoßkante
- 24:: Stoßkante
- 26:: Anformungen
- 28:: Ansätze
- 30:: Anlagefläche
- 32:: Boden
- L:: Längsrichtung der Führungsschiene 10

## Patentansprüche (Patentansprüche für folgende(n) Vertragsstaat(en): IT, NL)

1. Führungsschiene für ein Kfz-Schiebedachsystem (4), umfassend
ein erstes Schienenelement (12),
ein mit dem ersten Schienenelement (12) starr verbundenes zweites Schienenelement (14) und
wenigstens eine Führungsbahn (16), die sich ohne Unterbrechung über das erste und das zweite Schienenelement (12, 14) erstreckt und in der ein Gleitelement (18) eines mit einem Deckelteil (6) verbundenen Schlitten (20) geführt sein kann,
**dadurch gekennzeichnet, daß** beide Schienenelemente (12, 14) im Bereich ihrer Verbindung eine dem jeweils anderen Schienenelement zugewandte Stoßkante (22, 24) aufweisen, die zumindest im Bereich der Führungsbahn (16) von einer Senkrechten zur Längsrichtung (L) der Führungsschiene (10) abweicht, wobei die beiden Stoßkanten (22, 24) komplementär zueinander ausgebildet sind.

2. Führungsschiene nach Anspruch 1, **dadurch gekennzeichnet, daß** die Stoßkanten (22, 24) geradlinig verlaufen und mit der Längsrichtung (L) der Führungsschiene (10) einen spitzen Winkel einschließen.

3. Führungsschiene nach Anspruch 1 oder Anspruch 2, **dadurch gekennzeichnet, daß** das erste Schienenelement (12) aus einem anderen Material besteht als das zweite Schienenelement (14).

4. Führungsschiene nach einem der vorhergehenden Ansprüche, **dadurch gekennzeichnet, daß** es sich bei dem zweiten Schienenelement (14) um eine Profilschiene aus Metall handelt.

5. Führungsschiene nach einem der vorhergehenden Ansprüche, **dadurch gekennzeichnet, daß** es sich bei dem ersten Schienenelement (12) um ein Steckelement aus Kunststoff handelt.

6. Führungsschiene nach einem der vorhergehenden Ansprüche, **dadurch gekennzeichnet, daß** die Führungsbahn (16) im Bereich des ersten Schienenelements (12) einen sich schräg nach oben erstreckenden Abschnitt aufweist und im Bereich des zweiten Schienenelements (14) durchgehend geradlinig und parallel zur Längsrichtung (L) der Führungsschiene (10) verläuft.

7. Führungsschiene nach einem der vorhergehenden Ansprüche, **dadurch gekennzeichnet, daß** das erste Schienenelement (12) eine im wesentlichen in Längsrichtung (L) der Führungsschiene (10) verlaufende Anlagefläche (30) aufweist, mit der es sich am zweiten Schienenelement (14) abstützt.

## Patentansprüche (Patentansprüche für folgende(n) Vertragsstaat(en): DE, FR)

1. Führungsschiene für ein Kfz-Schiebedachsystem (4), umfassend
ein erstes Schienenelement (12),
ein mit dem ersten Schienenelement (12) starr verbundenes zweites Schienenelement (14) und
wenigstens eine Führungsbahn (16), die sich ohne Unterbrechung über das erste und das zweite Schienenelement (12, 14) erstreckt und in der ein Gleitelement (18) eines mit einem Deckelteil (6) verbundenen Schlitten (20) geführt sein kann,
**dadurch gekennzeichnet, daß** beide Schienenelemente (12, 14) im Bereich ihrer Verbindung eine dem jeweils anderen Schienenelement zugewandte Stoßkante (22, 24) aufweisen, die zumindest im Bereich der Führungsbahn (16) von einer Senkrechten zur Längsrichtung (L) der Führungsschiene (10) abweicht, wobei die beiden Stoßkanten (22, 24) komplementär zueinander ausgebildet sind, und daß die Stoßkanten (22, 24) geradlinig verlaufen und mit der Längsrichtung (L) der Führungsschiene (10) einen spitzen Winkel einschließen.

2. Führungsschiene nach Anspruch 1, **dadurch gekennzeichnet, daß** das erste Schienenelement (12) aus einem anderen Material besteht als das zweite Schienenelement (14).

3. Führungsschiene nach einem der vorhergehenden Ansprüche, **dadurch gekennzeichnet, daß** es sich bei dem zweiten Schienenelement (14) um eine Profilschiene aus Metall handelt.

4. Führungsschiene nach einem der vorhergehenden Ansprüche, **dadurch gekennzeichnet, daß** es sich bei dem ersten Schienenelement (12) um ein Steckelement aus Kunststoff handelt.

5. Führungsschiene nach einem der vorhergehenden Ansprüche, **dadurch gekennzeichnet, daß** die Führungsbahn (16) im Bereich des ersten Schienenelements (12) einen sich schräg nach oben erstreckenden Abschnitt aufweist und im Bereich des zweiten Schienenelements (14) durchgehend geradlinig und parallel zur Längsrichtung (L) der Führungsschiene (10) verläuft.

6. Führungsschiene nach einem der vorhergehenden Ansprüche, **dadurch gekennzeichnet, daß** das erste Schienenelement (12) eine im wesentlichen in Längsrichtung (L) der Führungsschiene (10) verlaufende Anlagefläche (30) aufweist, mit der es sich am zweiten Schienenelement (14) abstützt.

## Claims (Claims for the following Contracting State(s): IT, NL)

1. Guide rail for a motor vehicle sliding roof system (4), comprising
a first rail element (12),
a second rail element (14) connected rigidly to the first rail element (12), and
at least one guide track (16) which extends continuously over the first and the second rail element (12, 14) and in which a sliding element (18) of a slide (20) which is connected to a cover part (6) can be guided,
**characterized in that** the two rail elements (12, 14) have, in the region of connection thereof, an abutting edge (22, 24) which faces the other rail element in each case and, which at least in the region of the guide track (16), deviates from a perpendicular to the longitudinal direction (L) of the guide rail (10), the two abutting edges (22, 24) being of complementary design to each other.

2. Guide rail according to Claim 1, **characterized in that** the abutting edges (22, 24) run rectilinearly and enclose an acute angle with the longitudinal direction (L) of the guide rail (10).

3. Guide rail according to Claim 1 or Claim 2, **characterized in that** the first rail element (12) is composed of a different material than the second rail element (14).

4. Guide rail according to one of the preceding claims, **characterized in that** the second rail element (14) is a profile rail made of metal.

5. Guide rail according to one of the preceding claims, **characterized in that** the first rail element (12) is a plug-in element made of plastic.

6. Guide rail according to one of the preceding claims, **characterized in that** the guide track (16) has an obliquely upwardly extending section in the region of the first rail element (12) and runs continuously rectilinearly and parallel to the longitudinal direction (L) of the guide rail (10) in the region of the second rail element (14).

7. Guide rail according to one of the preceding claims, **characterized in that** the first rail element (12) has a bearing surface (30) which runs substantially in the longitudinal direction (L) of the guide rail (10) and with which it is supported on the second rail element (14).

## Claims (Claims for the following Contracting State(s): DE, FR)

1. Guide rail for a motor vehicle sliding roof system (4), comprising
a first rail element (12),
a second rail element (14) connected rigidly to the first rail element (12), and
at least one guide track (16) which extends continuously over the first and the second rail element (12, 14) and in which a sliding element (18) of a slide (20) which is connected to a cover part (6) can be guided,
**characterized in that** the two rail elements (12, 14) have, in the region of connection thereof, an abutting edge (22, 24) which faces the other rail element in each case and, which at least in the region of the guide track (16), deviates from a perpendicular to the longitudinal direction (L) of the guide rail (10), the two abutting edges (22, 24) being of complementary design to each other, and **in that** the abutting edges (22, 24) run rectilinearly and enclose an acute angle with the longitudinal direction (L) of the guide rail (10).

2. Guide rail according to Claim 1, **characterized in that** the first rail element (12) is composed of a different material than the second rail element (14).

3. Guide rail according to one of the preceding claims, **characterized in that** the second rail element (14) is a profile rail made of metal.

4. Guide rail according to one of the preceding claims, **characterized in that** the first rail element (12) is a plug-in element made of plastic.

5. Guide rail according to one of the preceding claims, **characterized in that** the guide track (16) has an obliquely upwardly extending section in the region of the first rail element (12) and runs continuously rectilinearly and parallel to the longitudinal direction (L) of the guide rail (10) in the region of the second rail element (14).

6. Guide rail according to one of the preceding claims, **characterized in that** the first rail element (12) has a bearing surface (30) which runs substantially in the longitudinal direction (L) of the guide rail (10) and with which it is supported on the second rail element (14).

## Revendications (Revendications pour l'(les) Etat(s) contractant(s) suivant(s): IT, NL)

1. Glissière pour un système de toit coulissant de véhicule automobile (4), comprenant :
un premier élément de glissière (12),
un deuxième élément de glissière (14) connecté rigidement au premier élément de glissière (12) et
au moins une piste de guidage (16) qui s'étend sans interruption pardessus le premier et le deuxième élément de glissière (12, 14) et dans laquelle un élément de glissement (18) d'un chariot (20) connecté à une partie de couvercle (6) peut être guidé,
**caractérisée en ce que** les deux éléments de glissière (12, 14) présentent, dans la région de leur connexion, une arête de butée (22, 24) tournée vers l'autre élément de glissière respectif, qui s'écarte au moins dans la région de la piste de guidage (16) d'une perpendiculaire à la direction longitudinale (L) de la glissière (10), les deux arêtes de butée (22, 24) étant réalisées de manière complémentaire l'une de l'autre.

2. Glissière selon la revendication 1, **caractérisée en ce que** les arêtes de butée (22, 24) s'étendent en ligne droite et forment avec la direction longitudinale (L) de la glissière (10) un angle aigu.

3. Glissière selon la revendication 1 ou 2, **caractérisée en ce que** le premier élément de glissière (12) se compose d'un matériau différent de celui du deuxième élément de glissière (14).

4. Glissière selon l'une quelconque des revendications précédentes, **caractérisée en ce que** le deuxième élément de glissière (14) est un rail profilé en métal.

5. Glissière selon l'une quelconque des revendications précédentes, **caractérisée en ce que** le premier élément de glissière (12) est un élément d'enfichage en plastique.

6. Glissière selon l'une quelconque des revendications précédentes, **caractérisée en ce que** la piste de guidage (16) présente, dans la région du premier élément de glissière (12), une portion s'étendant obliquement vers le haut, et s'étend, dans la région du deuxième élément de glissière (14), en ligne droite continue et parallèlement à la direction longitudinale (L) de la glissière (10).

7. Glissière selon l'une quelconque des revendications précédentes, **caractérisée en ce que** le premier élément de glissière (12) présente une surface d'appui (30) s'étendant essentiellement dans la direction longitudinale (L) de la glissière (10), avec laquelle il s'appuie sur le deuxième élément de glissière (14).

## Revendications (Revendications pour l'(les) Etat(s) contractant(s) suivant(s): DE, FR)

1. Glissière pour un système de toit coulissant de véhicule automobile (4), comprenant :
un premier élément de glissière (12),
un deuxième élément de glissière (14) connecté rigidement au premier élément de glissière (12) et
au moins une piste de guidage (16) qui s'étend sans interruption pardessus le premier et le deuxième élément de glissière (12, 14) et dans laquelle un élément de glissement (18) d'un chariot (20) connecté à une partie de couvercle (6) peut être guidé,
**caractérisée en ce que** les deux éléments de glissière (12, 14) présentent, dans la région de leur connexion, une arête de butée (22, 24) tournée vers l'autre élément de glissière respectif, qui s'écarte au moins dans la région de la piste de guidage (16) d'une perpendiculaire à la direction longitudinale (L) de la glissière (10), les deux arêtes de butée (22, 24) étant réalisées de manière complémentaire l'une de l'autre, et **en ce que** les arêtes de butée (22, 24) s'étendent en ligne droite et forment avec la direction longitudinale (L) de la glissière (10) un angle aigu.

2. Glissière selon la revendication 1, **caractérisée en ce que** le premier élément de glissière (12) se compose d'un matériau différent de celui du deuxième élément de glissière (14).

3. Glissière selon l'une quelconque des revendications précédentes, **caractérisée en ce que** le deuxième élément de glissière (14) est un rail profilé en métal.

4. Glissière selon l'une quelconque des revendications précédentes, **caractérisée en ce que** le premier élément de glissière (12) est un élément d'enfichage en plastique.

5. Glissière selon l'une quelconque des revendications précédentes, **caractérisée en ce que** la piste de guidage (16) présente, dans la région du premier élément de glissière (12), une portion s'étendant obliquement vers le haut, et s'étend, dans la région du deuxième élément de glissière (14), en ligne droite continue et parallèlement à la direction longitudinale (L) de la glissière (10).

6. Glissière selon l'une quelconque des revendications précédentes, **caractérisée en ce que** le premier élément de glissière (12) présente une surface d'appui (30) s'étendant essentiellement dans la direction longitudinale (L) de la glissière (10), avec laquelle il s'appuie sur le deuxième élément de glissière (14).
